(19) Europäisches Patentamt
European Patent Office
Office européen des brevets

(11) EP 4 656 697 A1

(12) **EUROPEAN PATENT APPLICATION**
published in accordance with Art. 153(4) EPC

(43) Date of publication:
**03.12.2025 Bulletin 2025/49**

(21) Application number: **24760209.7**

(22) Date of filing: **14.02.2024**

(51) International Patent Classification (IPC):
***C09J 7/24*** *(2018.01)* ***C09J 7/38*** *(2018.01)*
***C09J 107/00*** *(2006.01)* ***C09J 109/00*** *(2006.01)*
***C09J 133/08*** *(2006.01)* ***C09J 133/10*** *(2006.01)*

(52) Cooperative Patent Classification (CPC):
**C09J 7/24; C09J 7/38; C09J 107/00; C09J 109/00; C09J 133/08; C09J 133/10**

(86) International application number:
**PCT/JP2024/004976**

(87) International publication number:
**WO 2024/176907 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 JP 2023025360**

(71) Applicant: **Denka Company Limited**
**Tokyo 103-8338 (JP)**

(72) Inventors:
- **ARAMOTO, Kaho**
  **Tokyo 103-8338 (JP)**
- **HASUMI, Mizuki**
  **Tokyo 103-8338 (JP)**

(74) Representative: **Gulde & Partner**
**Patent- und Rechtsanwaltskanzlei mbB**
**Berliner Freiheit 2**
**10785 Berlin (DE)**

(54) **PRESSURE-SENSITIVE ADHESIVE TAPE AND METHOD FOR PRODUCING SAME**

(57) The present invention provides an adhesive tape that is excellent in lightweight properties, has good base material strength and adhesive strength, and is also excellent in the condition of the base material.

According to the present invention, an adhesive tape is provided, comprising a base material consisting of a resin composition containing a thermoplastic resin, and an adhesive layer provided on at least one surface of the base material, wherein the base material has a shrinkage rate in a TD of -5.0 to 0% under heating conditions of 110°C for 5 minutes, a shrinkage rate in a MD of 0 to 15% under heating conditions of 110°C for 5 minutes, a thickness of 25 to 65 μm, the adhesive layer has a thickness of 0.5 to 12.0 μm, the base material has a melt viscosity of 300 to 1,300 Pa·s at 175°C and at a shear rate of 250 $sec^{-1}$, and the base material has a melt tension of 0.01 to 0.10 N at 175°C and at a take-off speed of 1.0 m/min.

EP 4 656 697 A1

## Description

### Technical Field

The present invention relates to an adhesive tape and a method for manufacturing the same.

### Background Art

As various adhesive films, such as insulating tapes used in various electrical appliances in automobiles, railways, aircraft, ships, houses, factories, and the like, adhesive tapes are used which are produced by applying an adhesive on one surface of a base material made from a resin composition containing a thermoplastic resin, since they have adequate flexibility and elongation, and are excellent in terms of flame retardancy, mechanical strength, heat deformation resistance, electrical insulation, and formability, and are also relatively inexpensive (Patent Literatures 1 and 2).

### Citation List

### Patent Literature

[Patent Literature 1] JP-A-H11-209718
[Patent Literature 2] WO2019/049565 A

### Summary of Invention

### Technical Problem

In recent years, for the adhesive tapes, for example, in automobiles and aircraft, there has been a demand for weight reduction, that is, for making the base material and adhesive thinner, in order to improve fuel efficiency. However, when the base material is made thinner, the strength of the base material decreases, which in some cases may result in insufficient bundling of electric wires such as cables.

The present invention has been made in view of such circumstances, and an object thereof is to provide an adhesive tape that has excellent lightweight properties, that is, has a thin base material and adhesive, and also has sufficient base material strength and adhesive strength for bundling electric wires such as cables, and is further excellent in the condition of the base material.

### Solution to Problem

As a result of studies by the present inventors, they have found that an adhesive tape comprising a base material consisting of a resin composition containing a thermoplastic resin, and an adhesive layer provided on at least one surface of the base material, wherein the base material has a shrinkage rate in a transverse direction of -5.0 to 0% under heating conditions of 110°C for 5 minutes, a shrinkage rate in a machine direction of 0 to 15% under heating conditions of 110°C for 5 minutes, and a thickness of 25 to 65 μm, the adhesive layer has a thickness of 0.5 to 12.0 μm, the base material has a melt viscosity of 300 to 1,300 Pa·s at 175°C and at a shear rate of 250 $sec^{-1}$, and the base material has a melt tension of 0.01 to 0.10 N at 175°C and at a take-off speed of 1.0 m/min , provides an adhesive tape that is excellent in lightweight properties, has good base material strength and adhesive strength, and is also excellent in the condition of the base material.

That is, the present invention is:

[1] An adhesive tape comprising:

a base material consisting of a resin composition containing a thermoplastic resin; and
an adhesive layer provided on at least one surface of the base material, wherein:

a shrinkage rate of the base material in a transverse direction under heating conditions of 110°C for 5 minutes is -5.0 to 0%;
a shrinkage rate of the base material in a machine direction under heating conditions of 110°C for 5 minutes is 0 to 15%;
a thickness of the base material is 25 to 65 μm;

a thickness of the adhesive layer is 0.5 to 12.0 μm;
a melt viscosity of the base material at 175°C and at a shear rate of 250 $sec^{-1}$ is 300 to 1,300 Pa·s; and
a melt tension of the base material at 175°C and at a take-off speed of 1.0 m/min is 0.01 to 0.10 N.

[2] The adhesive tape of [1], wherein a storage modulus of the base material, as measured by a dynamic viscoelasticity measurement performed in a shear mode at a temperature of 175°C and at an angular frequency of 0.1 rad/s, is 20.0 to 70.0 kPa.
[3] The adhesive tape of [1] or [2], wherein a tensile modulus of the base material is 2 to 3500 MPa,
wherein the tensile strength of the base material is measured according to the conditions of "Section 8 'Tensile strength and elongation at break'" of JIS C 2107, and the tensile modulus is calculated from a obtained result by following formula:
Tensile modulus (MPa) = [Tensile stress (MPa) measured at a strain of 0.02 - Tensile stress (MPa) measured at a strain of 0.015]/0.005.
[4] The adhesive tape of any one of [1] to [3], wherein the thermoplastic resin is a polyvinyl chloride resin, and the polyvinyl chloride resin has an average degree of polymerization of 500 to 2,000.
[5] The adhesive tape of any one of [1] to [4], wherein the resin composition comprises 20 to 75 parts by mass of a plasticizer, and 30 parts by mass or less of a filler with respect to 100 parts by mass of the thermoplastic resin.
[6] The adhesive tape of [5], wherein the filler has an average particle diameter of 0.3 μm or less.
[7] The adhesive tape of [5] or [6], wherein the plasticizer comprises at least one selected from a group consisting of a trimellitate ester plasticizer, a phthalate ester plasticizer, and an adipate ester plasticizer.
[8] The adhesive tape of any one of [1] to [7], wherein the adhesive layer comprises a tackifier.
[9] The adhesive tape of [8], wherein the tackifier comprises a petroleum resin.
[10] The adhesive tape of any one of [1] to [9], wherein the adhesive layer comprises a graft copolymer of an alkyl (meth)acrylate and at least one rubber component selected from a group consisting of natural rubber and synthetic rubber.
[11] The adhesive tape of any one of [1] to [10], wherein the thickness of the base material is 40 to 60 μm.
[12] The adhesive tape of any one of [1] to [11], wherein the thickness of the adhesive layer is 2.0 to 10.0 μm.
[13] The adhesive tape of any one of [1] to [12], wherein the adhesive tape is for bundling electric wires.
[14] A bundle of electric wires bundled with the adhesive tape of [13].
[15] A method for manufacturing the adhesive tape of any one of [1] to [12], the method comprising:

a step of obtaining the base material by stretching the resin composition containing the thermoplastic resin in the machine direction at a stretching ratio of 3.5 times or less; and
a step of providing the adhesive layer on at least one surface of the base material,
wherein a temperature of the resin composition immediately before stretching is 165°C or higher in the step of obtaining the base material.

**Advantageous** Effects of Invention

According to the present invention, it is possible to provide an adhesive tape that is excellent in lightweight properties, has good base material strength and adhesive strength, and is also excellent in the condition of the base material.

Description of Embodiments

<Explanation of Terms>

In the present specification, for example, the phrase "A to B" means A or more and B or less.
Hereinafter, the embodiments of the present invention will be described in detail. The present invention is not limited thereto, and various variations are possible without departing from the scope of the invention. Various distinctive features shown in the following embodiments can be combined with each other. In addition, an invention can be established independently for each of the distinctive features.
Furthermore, in the present invention, the MD of the base material and the adhesive tape means the feed direction of the film (Machine Direction) in the line for producing the base material and the adhesive tape, and the TD of the base material and the adhesive tape means the direction orthogonal to the MD in the plane of the base material and the adhesive tape (Transverse Direction).

<Configuration of Adhesive Tape>

The adhesive tape according to an embodiment of the present invention has a base material and an adhesive layer formed on one surface of the base material. Hereinafter, each component will be described in detail.

<Base Material>

The base material according to an embodiment of the present invention consists of a resin composition containing a thermoplastic resin. The resin composition may contain, in addition to the thermoplastic resin, for example, a plasticizer, a filler, other additives and the like.

Examples of the thermoplastic resin according to an embodiment of the present invention include polyvinyl chloride resins, polyester-based resins, polyimide-based resins, polyamide-based resins, and polyolefin-based resins. These thermoplastic resins may be used alone or in combination of two or more. The thermoplastic resin according to one embodiment preferably contains a vinyl chloride-based resin.

The thermoplastic resin, for example, contains 80% by mass or more, preferably 90% by mass or more, of a vinyl chloride-based resin in a total of 100% by mass of the thermoplastic resin, and more preferably consists only of a vinyl chloride-based resin (100% by mass). Polyvinyl chloride resin is preferable from the viewpoint of applications for bundling electric wires because it is excellent in insulation, and properties for bundling electric wires (flexibility, stretchability).

<Polyvinyl Chloride Resins>

The polyvinyl chloride resin in an embodiment of the present invention preferably has an average degree of polymerization of 500 to 2,000, and more preferably 700 to 1,800. In addition, two or more types of polyvinyl chloride resins with different average degrees of polymerization may be used. If the average degree of polymerization is less than 500, the entanglement of polymer chains may be insufficient, and sufficient strength (abrasion resistance) may not be obtained. If the average degree of polymerization is higher than 2,000, it is difficult to gel, which may deteriorate film-forming properties and may worsen the condition of the base material.

<Plasticizer>

The plasticizer in an embodiment of the present invention is not particularly limited as long as it can impart flexibility to the base material. Examples of the plasticizer include trimellitate ester plasticizers, adipate ester plasticizers, phthalate ester plasticizers, epoxy-based plasticizers, isophthalate ester plasticizers, terephthalate ester plasticizers, and phosphate ester plasticizers. From the viewpoints of plasticizing effect on the thermoplastic resin and low bleed-out, trimellitate ester plasticizers, phthalate ester plasticizers, and adipate ester plasticizers are preferable. These plasticizers may be used alone or in combination of two or more.

<Trimellitate Ester Plasticizer>

As the trimellitate ester, a trialkyl trimellitate (tri(C4-11 alkyl) trimellitate) shown in Formula 1 is preferable. In Formula 1, n is preferably 5 to 10, more preferably 6 to 9, and even more preferably 8.

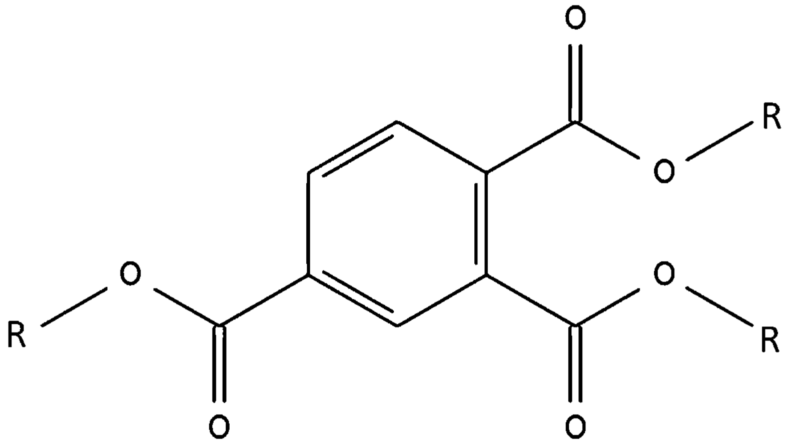

Formula 1

$$R = C_nH_{2n+1} (n = 4 \sim 11)$$

Examples of the tri(C4-11 alkyl) trimellitate include tributyl trimellitate, trihexyl trimellitate, tri-n-octyl trimellitate, triisooctyl trimellitate, tri-2-ethylhexyl trimellitate, trinonyl trimellitate and the like. From the viewpoints of plasticizing efficiency, elongation of the base material, and heat resistance, tri-n-octyl trimellitate is particularly preferable. The molecular weight of the trimellitate ester is, for example, preferably 378 to 672, more preferably 420 to 630, and even more preferably 462 to 588. These plasticizers may be used alone or in combination of two or more.

<Phthalate Ester Plasticizer>

Examples of the phthalate ester plasticizer in an embodiment of the present invention include, for example, DINP (diisononyl phthalate), DHP (diheptyl phthalate), DOP (di-2-ethylhexyl phthalate), n-DOP (di-n-octyl phthalate), and DIDP (diisodecyl phthalate). From the viewpoints of plasticizing effect on polyvinyl chloride resin, low bleed-out, and low impact on the human body, diesters of phthalic acid and C9-10 alcohols, such as DINP (diisononyl phthalate) and DIDP (diisodecyl phthalate), are preferable. From the viewpoint of plasticizing efficiency, diisononyl phthalate is particularly preferable. These plasticizers may be used alone or in combination of two or more.

<Adipate Ester Plasticizer>

Examples of the adipate ester plasticizer in an embodiment of the present invention include, for example, adipic acid-propylene glycol-based polyesters and adipic acid-butylene glycol-based polyesters. From the viewpoint of heat resistance, adipic acid polyesters are preferable. The weight-average molecular weight of the adipate ester is, for example, preferably 1,000 to 4,100, more preferably 1,600 to 4,100, and even more preferably 2,000 to 4,100. These plasticizers may be used alone or in combination of two or more.

<Content of Plasticizer>

The resin composition composing the base material in an embodiment of the present invention preferably contains 20 to 75 parts by mass, more preferably 25 to 65 parts by mass, and even more preferably 30 to 55 parts by mass of the plasticizer, with respect to 100 parts by mass of the thermoplastic resin. The content of the plasticizer is, for example, preferably 20, 25, 30, 35, 40, 45, 50, 55, 60, 65, 70, or 75 parts by mass with respect to 100 parts by mass of the thermoplastic resin, and may be within a range between any two of the values exemplified herein. By setting the plasticizer content to 25 parts by mass or more, flexibility can be imparted to the base material. By setting it to 75 parts by mass or less, elasticity can be imparted to the base material.
When plasticizers are used in combination, the content of the plasticizer means the total amount of the combined plasticizers.

<Filler>

The filler in an embodiment of the present invention is not particularly limited as long as it facilitates the release of the base material from the calender roll during the film forming step in the manufacturing process of the base material. For

example, inorganic fillers are preferable from the viewpoint of advantageous effects: a balance between reinforcing effect and flexibility.

<Inorganic Filler>

Examples of the inorganic filler in an embodiment of the present invention include calcium carbonate, aluminum hydroxide, magnesium hydroxide, zirconium hydroxide, calcium hydroxide, potassium hydroxide, barium hydroxide, triphenyl phosphite, ammonium polyphosphate, polyphosphoric amide, zirconium oxide, magnesium oxide, zinc oxide, titanium oxide, molybdenum oxide, guanine phosphate, hydrotalcite, smectite, zinc borate, anhydrous zinc borate, zinc metaborate, barium metaborate, antimony oxide, antimony pentoxide, red phosphorus, talc, alumina, silica, boehmite, bentonite, sodium silicate, calcium silicate, calcium sulfate, magnesium carbonate, and carbon black. From the viewpoint of a balance between reinforcing effect and flexibility, calcium carbonate is preferable. These fillers may be used alone or in combination of two or more.

The content of the filler in an embodiment of the present invention is preferably 30 parts by mass or less, and more preferably 20 parts by mass or less, with respect to 100 parts by mass of the thermoplastic resin. The content of the filler is, for example, preferably 1, 5, 10, 15, 20, 25, or 30 parts by mass, and may be within a range between any two of the values exemplified herein. By including a filler, the base material becomes easier to release from the calender roll in the film-forming step in manufacturing the base material, which is advantageous in terms of manufacturing cost. However, if the filler content exceeds 30 parts by mass, pinholes may form in the base material, which is not preferable.

When fillers are used in combination, the content of the filler means the total amount of the combined fillers.

<Average Particle Diameter of Filler>

The average particle diameter of the filler in an embodiment of the present invention is preferably 0.3 μm or less, and more preferably 0.2 μm or less.

By setting the average particle diameter to 0.3 μm or less, pinholes during film formation can be suppressed.

The average particle diameter of the filler refers to the particle diameter corresponding to a cumulative value of 50% in the cumulative particle size distribution on a volume basis, measured using a laser diffraction particle size analyzer. The cumulative particle size distribution is represented by a distribution curve with the particle diameter (μm) on the horizontal axis and the cumulative value (%) on the vertical axis.

<Other Additives Contained in Resin Composition>

The resin composition in the present embodiment may contain other additives such as colorants, stabilizers, antioxidants, ultraviolet absorbers, and lubricants, as necessary, that it does not impair the effect of the present invention.

Examples of stabilizers include metal soaps (metal complex stabilizers) and the like. By including a stabilizer such as a metal soap, the thermal stability of the base material is likely to improve.

Examples of metal complex stabilizers include at least one selected from calcium fatty acid, zinc fatty acid, and barium fatty acid. Examples of the fatty acid component of the metal complex stabilizer include lauric acid, stearic acid, ricinoleic acid and the like. Specific examples of such metal complex stabilizers include calcium laurate, calcium stearate, calcium ricinoleate, zinc laurate, zinc ricinoleate, zinc stearate, barium laurate, barium stearate, barium ricinoleate, and the like, which are preferably used. These may be used alone or in combination of two or more. From the viewpoint of enhancing the thermal stability effect through combination, a Ca-Zn-based metal stabilizer containing calcium fatty acid and zinc fatty acid is preferably used.

In one embodiment, the ratio of the metal complex stabilizer contained in the base material is preferably 0.1 to 10 parts by mass, and more preferably 1 to 5 parts by mass, with respect to 100 parts by mass of the polyvinyl chloride resin. In another embodiment, the ratio of the metal complex stabilizer is preferably 0.5 to 10% by mass, and more preferably 1 to 5% by mass when the total mass of the resin composition for the base material is taken as 100% by mass.

Examples of the lubricant include higher fatty acids such as stearic acid and palmitic acid; higher alcohols such as palmityl alcohol and stearyl alcohol; metal salts of higher fatty acids such as calcium stearate, zinc stearate, barium stearate, aluminum stearate, magnesium stearate, and sodium palmitate; higher fatty acid esters such as butyl stearate and glyceryl monostearate; and higher fatty acid amides such as oleic acid amide, stearic acid amide, and erucic acid amide. Here, "higher" means having 9 or more carbon atoms, and preferably 9 to 30 carbon atoms. These may be used alone or in combination of two or more. Among these, from the viewpoint of the film-forming properties of the base material, it is preferable to include stearic acid.

The ratio of the lubricant in the base material is preferably 1% by mass or less, and more preferably 0.5% by mass or less, when the total mass of the resin composition for the base material is taken as 100% by mass.

<Shrinkage Rate of Base Material in TD>

The shrinkage rate in the TD of the base material in an embodiment of the present invention under heating conditions of 110°C for 5 minutes is -5.0 to 0.0%, preferably -4.0 to 0.0%, and more preferably -3.0 to 0.0%. The shrinkage rate in the TD of the base material is, for example, -5.0, -4.0, -3.0, -2.0, -1.0, or 0.0%, and may be within a range between any two of the values exemplified herein. The shrinkage rate in the TD closer to 0% is preferable because it indicates excellent coating stability of the adhesive onto the base material and good base material condition. From the viewpoint of coating stability of the adhesive onto the base material, it is preferable that the shrinkage rate in the TD has a lower limit of -5.0%.

The shrinkage rate in the TD of the base material under heating conditions of 110°C for 5 minutes can be controlled, for example, by setting the MD stretching ratio to 3.5 times or less in the film-forming step in manufacturing the base material.

The shrinkage rate in the TD of the base material under heating conditions of 110°C for 5 minutes can be calculated by the following formula after measuring the side length of the TD of a 50 mm square film after heating it in an oven at 110°C for 5 minutes.

$$\text{Heat Shrinkage rate in TD (\%)} = \{[50 - \text{side length of TD after heating (mm)}]/50\} \times 100$$

<Shrinkage Rate of Base Material in MD>

The shrinkage rate in the MD of the base material in an embodiment of the present invention under heating conditions of 110°C for 5 minutes is 0.0 to 15.0%, preferably 0.0 to 10.0%, and more preferably 0.0 to 5.0%. The shrinkage rate in the MD of the base material is, for example, 0.0, 2.0, 4.0, 6.0, 8.0, 9.0, 10.0, 12.0, 14.0, or 15.0%, and may be within a range between any two of the values exemplified herein.

The shrinkage rate in the MD closer to 0% is preferable because it indicates excellent coating stability of the adhesive onto the base material and good base material condition. From the viewpoint of coating stability of the adhesive onto the base material, it is preferable that the shrinkage rate in the MD has an upper limit of 15.0%.

The shrinkage rate in the MD of the base material under heating conditions of 110°C for 5 minutes can be controlled, for example, by setting the MD stretching ratio to 3.5 times or less in the film-forming step in manufacturing the base material.

The shrinkage rate in the MD of the base material under heating conditions of 110°C for 5 minutes can be calculated by the following formula after measuring the side length of the MD of a 50 mm square film after heating it in an oven at 110°C for 5 minutes.

$$\text{Heat Shrinkage rate in MD (\%)} = \{[50 - \text{side length of MD after heating (mm)}]/50\} \times 100$$

<Melt Viscosity of Base Material>

The melt viscosity of the base material in an embodiment of the present invention at 175°C and at a shear rate of 250 $sec^{-1}$ is 300 to 1,300 Pa·s, preferably 400 to 1,100 Pa·s, and more preferably 500 to 800 Pa·s. The melt viscosity of the base material is, for example, 300, 500, 700, 900, 1,100, or 1,300 Pa·s, may be within a range between any two of the values exemplified herein.

By setting the melt viscosity to 300 Pa·s or more, the base material becomes easier to release from the calender roll in the film-forming step in manufacturing the base material. In addition, it is possible to reduce the occurrence of stretching unevenness during stretching due to the resin being too soft, and control during MD stretching becomes easier. By setting the melt viscosity to 1,300 Pa·s or less, it becomes possible to appropriately narrow the gap between the calender rolls in the film-forming step in manufacturing the base material, and control of the MD stretching ratio becomes easier. Furthermore, it becomes possible to sufficiently knead the resin.

The melt viscosity of the base material at 175°C and at a shear rate of 250 $sec^{-1}$ can be controlled, for example, by adjusting the content of the plasticizer contained in the resin composition.

The melt viscosity of the base material at 175°C and at a shear rate of 250 $sec^{-1}$ can be measured using a Capillary Rheometer 1D manufactured by Toyo Seiki Seisaku-sho, Ltd., with a capillary die of L=40 mm and D=1 mm, under the conditions of 175°C and a shear rate of 250/sec.

<Melt Tension of Base Material>

The melt tension of the base material in an embodiment of the present invention at 175°C and at a take-off speed

of 1.0 m/min is 0.01 to 0.10 N, preferably 0.02 to 0.09 N, and more preferably 0.03 to 0.08 N. The melt tension of the base material is, for example, 0.01, 0.02, 0.03, 0.04, 0.05, 0.06, 0.07, 0.08, 0.09, or 0.10 N, and may be within a range between any two of the values exemplified herein.

By setting the melt tension to 0.01 N or more, it is possible to prevent the base material from being overly stretched and forming holes, or from breaking, when the base material is stretching in the film-forming step in manufacturing the base material. By setting the melt tension to 0.10 N or less, it becomes possible to sufficiently stretch the base material when the base material is stretching in the film-forming step in manufacturing the base material, and control of the MD stretching ratio becomes easier.

The melt tension of the base material at 175°C and at a take-off speed of 1.0 m/min can be controlled, for example, by adjusting the content of the plasticizer contained in the resin composition.

The melt tension of the base material at 175°C and at a take-off speed of 1.0 m/min can be measured by taking off the resin extruded from a capillary die at 1 m/min, using a capillary die of L=40 mm and D=1 mm, under the condition of a shear rate of 120/sec. The measurement can be performed using a Capillary Rheometer 1D manufactured by Toyo Seiki Seisaku-sho, Ltd.

<Storage Modulus of Base Material>

The storage modulus of the base material in an embodiment of the present invention, as measured by a dynamic viscoelasticity measurement performed in a shear mode at a temperature of 175°C and at an angular frequency of 0.1 rad/s, is preferably 20.0 to 70.0 kPa, more preferably 30.0 to 65.0 kPa or more, and even more preferably 50.0 to 60.0 kPa or more. The storage modulus of the base material is, for example, 20.0, 30.0, 40.0, 50.0, 60.0, 65.5, or 70.0 kPa, and may be within a range between any two of the values exemplified herein.

By setting the storage modulus to 20.0 kPa or more, the base material is easily released from the rolls during film formation and can be stably formed into a film. By setting the storage modulus to 70.0 kPa or less, thickness adjustment during film formation of the base material is easy, and film formation to a desired thickness becomes easy.

The storage modulus of the base material, as measured by a dynamic viscoelasticity measurement performed in a shear mode at a temperature of 175°C and at an angular frequency of 0.1 rad/s, can be controlled, for example, by adjusting the content of the plasticizer contained in the resin composition.

The storage modulus of the base material, as measured by a dynamic viscoelasticity measurement performed in a shear mode at a temperature of 175°C and at an angular frequency of 0.1 rad/s, can be measured using a Rheometer MCR302 (parallel plate φ25mm) from Anton Paar on a disk-shaped sample with a thickness of 1 mm and a diameter of φ25 mm obtained by stacking several sheet-like base materials and pressing them at for 1 minute at 150°C and 10 MPa using a benchtop vacuum test press SA-303 from Tester Sangyo Co., Ltd.

<Tensile Modulus of Base Material>

The tensile modulus of the base material in an embodiment of the present invention calculated by the formula "Tensile modulus (MPa) = [Tensile stress (MPa) measured at a strain of 0.02 - Tensile stress (MPa) measured at a strain of 0.015]/0.005" from the results obtained by measuring the tensile strength according to the conditions of "Section 8 'Tensile strength and elongation at break'" of JIS C 2107, is preferably 2 to 3,500 MPa, more preferably 20 to 2,000 MPa, and even more preferably 80 to 1,500 MPa. The tensile modulus of the base material is, for example, 2, 10, 50, 100, 200, 500, 1,000, 1,500, 2,000, 2,500, 3,000, or 3,500 MPa, and may be within a range between any two of the values exemplified herein.

By setting the tensile modulus to 2 MPa or more, the base material can have a hardness suitable for handling as an adhesive tape, which is advantageous from the viewpoint of work efficiency. By setting the tensile modulus to 3,500 MPa or less, the base material can have a softness suitable for handling as an adhesive tape, which is advantageous from the viewpoint of work efficiency.

The above-mentioned tensile modulus of the base material can be controlled, for example, by adjusting the content of the plasticizer contained in the resin composition.

<Thickness of Base Material>

The thickness of the base material in an embodiment of the present invention is 25 to 65 μm, preferably 40 to 60 μm, and more preferably 45 to 55 μm. The thickness of the base material is, for example, 25, 30, 35, 40, 45, 50, 55, 60, or 65 μm, and may be within a range between any two of the values exemplified herein.

By setting the thickness of the base material to 65 μm or less, the base material becomes thinner, allowing for thinning and weight reduction of the adhesive tape. By setting the thickness of the base material to 25 μm or more, the necessary strength for the adhesive tape can be maintained. By adopting a base material that satisfies the above-mentioned requirements, the adhesive tape of the present invention can maintain the necessary base material strength

even with a thickness as thin as 65 μm or less.

The thickness of the base material can be controlled, for example, by adjusting the gap between the calender rolls of a calender film-forming machine or by applying stretching.

The thickness of the base material can be measured with a thickness gauge (manufactured by Mitutoyo Corporation) after removing only the adhesive layer of the adhesive tape with a solvent.

<Adhesive Layer>

The adhesive layer in an embodiment of the present invention is composed of an adhesive. The adhesive may contain, for example, a base polymer, a tackifier, other additives, and the like.

<Adhesive>

The adhesive of the adhesive layer in an embodiment of the present invention is preferably a rubber-based adhesive, and may be of a solvent type or an emulsion type. As a rubber-based adhesive, one containing a rubber component as a base polymer and a tackifier is preferable from the viewpoint of expressing adhesive strength to any adherend.

<Base Polymer>

Examples of the rubber component as a base polymer include natural rubber, synthetic rubbers such as styrene-isoprene-styrene block copolymers (SIS), styrene-butadiene-styrene block copolymers (SBS), hydrogenated products of the said styrene-based block copolymers (SIPS, SEBS), styrene-butadiene rubber (SBR), polyisoprene rubber (IR), polyisobutylene (PIB), and butyl rubber (IIR), graft copolymers of an alkyl (meth)acrylate and at least one rubber component selected from natural rubber and the said synthetic rubbers, and the like. In this embodiment, from the viewpoints of improving the elastic modulus of the adhesive layer to increase the adhesive strength to its own back surface and suppressing cohesive failure of the adhesive layer, the rubber-based adhesive preferably contains a graft copolymer of an alkyl (meth)acrylate and at least one rubber component selected from natural rubber and synthetic rubber (hereinafter also referred to as "graft rubber"). These may be used alone or mixed in two or more types.

The tackifier can be selected in consideration of its softening point, compatibility with each component, and the like. Examples include terpene resins, rosin resins, hydrogenated rosin resins, coumarone-indene resins, styrene-based resins, petroleum resins, terpene-phenol resins, xylene-based resins, and other aliphatic hydrocarbon resins and aromatic hydrocarbon resin emulsions. From the viewpoint of imparting good tack performance, petroleum resins are preferable. These may be used alone or mixed in two or more types.

<Thickness of Adhesive Layer>

The thickness of the adhesive layer in an embodiment of the present invention is 0.5 to 12.0 μm, preferably 2.0 to 10.0 μm. The thickness of the adhesive layer is, for example, 0.5, 1.0, 1.5, 2.0, 3.0, 5.0, 8.0, 10.0, 11.0, or 12.0 μm, and may be within a range between any two of the values exemplified herein.

By setting the thickness of the adhesive layer to 12.0 μm or less, the adhesive layer becomes thinner, allowing for thinning and weight reduction of the adhesive tape. By setting the thickness of the adhesive layer to 0.5 μm or more, the necessary adhesive strength for the adhesive tape can be maintained. By adopting an adhesive layer that satisfies the above-mentioned requirements, the adhesive tape of the present invention can maintain the necessary adhesive strength even with a thickness as thin as 12.0 μm or less.

The thickness of the adhesive layer can be controlled, for example, by thin film coating using a gravure roll. In the case of gap coating, it can be controlled by narrowing the gap or adjusting the solid content concentration of the adhesive.

The thickness of the adhesive layer can be measured by measuring the tape thickness according to the conditions of "Section 5 'Measurement of thickness'" of JIS C 2107, then removing only the adhesive layer of the adhesive tape with a solvent, and measuring the difference between the tape thickness and the base material thickness measured with a thickness gauge (manufactured by Mitutoyo Corporation).

<Method for Manufacturing Adhesive Tape>

<Manufacture of Base Material>

The resin composition for manufacturing the base material of the embodiment can be obtained by melt-kneading a thermoplastic resin, and optionally plasticizers, fillers, heat stabilizers, light absorbers, pigments, other additives, and the

like, as necessary. The melt-kneading method is not particularly limited, but a twin-screw extruder, a continuous or batch-type kneader, a roll, a banbury mixer, or other various mixing and kneading machines equipped with a heating device can be used to uniformly disperse the resin composition. The resulting mixture is formed into a base material by a conventional molding method such as calendering, T-die method, or inflation method. From the viewpoints of productivity, color change, and uniformity of shape, a calender molding machine is preferable. As the roll arrangement method in calendering, known methods such as L-type, inverted L-type, and Z-type can be adopted.

<Molding of Base Material>

<Temperature of Resin Composition Immediately Before Stretching>

When molding the base material of the embodiment, the temperature of the resin composition immediately before stretching the formed resin composition is preferably 165°C or higher, more preferably 170°C or higher, and even more preferably 175°C or higher. The upper limit of the temperature of the resin composition immediately before stretching is not particularly limited, but it is practically 190°C or lower from the viewpoint of preventing resin degradation and the like.
By setting the temperature of the resin composition immediately before stretching to 165°C or higher, the resin can be sufficiently kneaded in the process, making thickness control easier, and the TD and MD shrinkage rates of the resulting base material at 110°C for 5 minutes of heating can be controlled within a desired range.
The temperature of the resin composition immediately before stretching is the temperature of the resin composition after it has been formed into a film and immediately before it is stretched. For example, when molding with a calender molding machine, it is the temperature at which the formed resin composition is peeled off from the calender roll by a take-off roll (pickup roll) and stretching begins, and it can be controlled by adjusting the set temperature of the calender roll.

<MD Stretching Ratio>

When molding the base material of the embodiment with a calender molding machine, the MD stretching ratio when stretching the formed resin composition is preferably 3.5 times or less, more preferably 3.0 times or less, and even more preferably 2.0 times or less. The lower limit of the stretching ratio is not particularly limited, but it is practically 1.1 times or more from the viewpoint of work efficiency in the take-off process.
By setting the stretching ratio to 3.5 times or less, the TD and MD shrinkage rates of the resulting base material at 110°C for 5 minutes of heating can be controlled within a desired range.
The MD stretching ratio during stretching in the present invention means the sum of the stretching ratio when taking off from the calender roll to the take-off roll, and the stretching ratio when taking off from the take-off roll to the winding roll.
The MD stretching ratio can be controlled by adjusting the speed of the calender roll and the speed of the take-off roll immediately after the calender roll.

<Application of Adhesive Layer>

The adhesive tape of the embodiment is obtained by, for example, coating an adhesive on at least one surface of the base material obtained as described above, and sufficiently removing the solvent in a drying oven to form the adhesive tape. Examples of the adhesive coating method include a lip die method, a gravure method, a roll method, a slot die method, and the like.

<Primer Layer>

The adhesive tape of the embodiment may have a primer layer between the base material and the adhesive layer, as necessary, for the purpose of improving the adhesion between the base material and the adhesive layer, that does not impair the effect of the present invention.
As the primer for forming the primer layer, a material consisting of 25 to 300 parts by mass of an acrylonitrile-butadiene copolymer with respect to 100 parts by mass of a graft copolymer obtained by graft-polymerizing methyl methacrylate onto natural rubber is preferable.

<Applications of Adhesive Tape>

The adhesive tape of the embodiment is suitably used, for example, as an adhesive tape for bundling electric wires such as high-voltage cables and wire harnesses of electric vehicles and hybrid vehicles.

Since the adhesive tape is lightweight, the electric wires bundled with the adhesive tape of the embodiment are also lightweight.

**Example**

Hereinafter, the present invention will be described in more detail with reference to examples. These are merely illustrative and are not intended to limit the scope of the present invention.

<Preparation of Base Material>

<Materials Used>

(1) Thermoplastic Resin

Polyvinyl chloride resin, average degree of polymerization 650-770: Product name "TH-700", manufactured by Taiyo Vinyl Corporation
Polyvinyl chloride resin, average degree of polymerization 980-1,080: Product name "TH-1000", manufactured by Taiyo Vinyl Corporation
Polyvinyl chloride resin, average degree of polymerization 1,270-1,370: Product name "TH-1300", manufactured by Taiyo Vinyl Corporation
Polyvinyl chloride resin, average degree of polymerization 1,600-1,800: Product name "TH-1700", manufactured by Taiyo Vinyl Corporation

(2) Plasticizer

Phthalate ester plasticizer, diisononyl phthalate: Product name "DINP", manufactured by J-PLUS Co., Ltd.
Trimellitate ester plasticizer, trioctyl trimellitate: Product name "MONOCIZER W-750", manufactured by DIC Corporation
Adipate ester plasticizer, adipic polyester, weight average molecular weight 2,300, Product name "POLYCIZER W-2050", manufactured by DIC Corporation

(3) Filler
Calcium carbonate: average particle diameter 0.18 μm, Product name "Calseeds (registered trademark) P", manufactured by Kamishima Chemical Co., Ltd.

The thermoplastic resin, plasticizer, filler, and other additives were melt-kneaded in the proportions shown in Tables 1 and 2 with a banbury mixer to be uniformly dispersed, and then a base material of a specified thickness was produced with a calender molding machine at the roll temperatures and stretching ratios (overall stretching ratio) shown in Tables 1 and 2.

<Preparation of Adhesive Tape>

<Materials Used>

(1) Base Material
The base material prepared in the above process
(2) Primer Layer
A mixed emulsion of a graft copolymer latex obtained by graft-polymerizing methyl methacrylate onto natural rubber and an acrylonitrile-butadiene copolymer emulsion: Product name KT4612A, manufactured by E-TEC. CO., LTD.
(3) Adhesive Layer

[Base Polymer]

Natural rubber latex: Product name "HA LATEX", manufactured by Resitex Co., Ltd.

Graft copolymer latex obtained by graft-polymerizing methyl methacrylate onto natural rubber: Product name "MG-40S", manufactured by Resitex Co., Ltd.
Styrene-butadiene rubber latex: Product name "T-093A", manufactured by JSR Corporation
In the tables, NR stands for natural rubber, MMA for methyl methacrylate, and SBR for styrene-butadiene rubber.

[Tackifier]

Petroleum resin emulsion: Product name "AP-1100", manufactured by Arakawa Chemical Industries, Ltd.
Terpene-phenol resin emulsion: Product name "E200", manufactured by Arakawa Chemical Industries, Ltd.

[Additives]

Surfactant: Product name "OT-P", manufactured by Kao Corporation
Antioxidant/Plasticizer: Product name "DIEM", manufactured by San-ai Obbli Co., Ltd.

A primer was coated on one surface of the base material by a gravure method and the solvent was sufficiently removed in a drying oven. Then, an adhesive was coated by a roll method, and the solvent was sufficiently removed in a drying oven in the same manner as for the primer, to produce an adhesive tape. The thickness of the primer layer after drying was 0.3 μm, and the thickness of the adhesive layer after drying was 7 μm.

<Physical Properties of Base Material and Adhesive Tape>

The physical properties of the base materials and adhesive tapes were measured and evaluated under the following measurement conditions. The results are shown in Tables 1 and 2.

<Melt Viscosity>

The melt viscosity was measured using a Capillary Rheometer 1D manufactured by Toyo Seiki Seisaku-sho, Ltd., with a capillary die of L=40 mm and D=1 mm, under the conditions of 175°C and a shear rate of 250/sec.

<Melt Tension>

The melt tension was measured by taking off the resin extruded from a capillary die at 1 m/min, using a capillary die of L=40 mm and D=1 mm, under the conditions of 175°C and a shear rate of 120/sec. The measurement was performed using a Capillary Rheometer 1D manufactured by Toyo Seiki Seisaku-sho, Ltd.

<Heat Shrinkage rate in MD>

The MD heat shrinkage rate was calculated by the following formula after measuring the side length of the MD of a 50 mm square film after heating it in an oven at 110°C for 5 minutes.

Heat Shrinkage rate in MD (%) = {[50 - side length of MD after heating (mm)]/50} × 100

<Heat Shrinkage rate in TD>

The TD heat shrinkage rate was calculated by the following formula after measuring the side length of the TD of a 50 mm square film after heating it in an oven at 110°C for 5 minutes.

$$\text{Heat Shrinkage rate in TD (\%)} = \{[50 - \text{side length of TD after heating (mm)}]/50\} \times 100$$

<Storage Modulus>

A sheet-like base material was stacked, pressed for 1 minute at 150°C and 10 MPa using a benchtop vacuum test

press SA-303 from Tester Sangyo Co., Ltd. to obtain a 1 mm thick sheet. The obtained sheet was cut into a disc shape of φ25 mm to obtain a sample. The obtained sample was subjected to dynamic viscoelasticity measurement in a shear mode using a Rheometer MCR302 (parallel plate φ25 mm) from Anton Paar. After mounting the sample on the said apparatus, the storage modulus (G') in GPa was measured at a temperature of 175°C in an angular frequency range of 0.1 to 100 rad/s.

<Tensile Modulus>

The tensile strength of the base material was measured according to the conditions of "Section 8 'Tensile strength and elongation at break'" of JIS C 2107. The tensile modulus is calculated from the obtained result by the following formula.

Tensile modulus (MPa) = [Tensile stress (MPa) measured at a strain of 0.02 - Tensile stress (MPa) measured at a strain of 0.015]/0.005.

<Adhesive Strength>

Adhesive strength was evaluated according to the following procedure.
Adhesive Strength (Normal, To Self-Backing):
The adhesive strength of the adhesive tape was measured according to the conditions of "Section 11 'Adhesion'" of JIS C 2107.

<Base Material Strength>

The strength of the base material was evaluated from the viewpoints of breaking stress and elongation at break. Elongation at break is a property that includes flexibility, which is an important characteristic when used as an adhesive tape.

(Breaking Stress)

The base material strength was evaluated by breaking stress according to the following procedure.
The tensile strength of the base material was measured according to the conditions of "Section 8 'Tensile strength and elongation at break'" of JIS C 2107.

(Elongation at Break)

The base material strength was evaluated by elongation at break according to the following procedure.
The elongation at break of the base material was measured according to the conditions of "Section 8 'Tensile strength and elongation at break'" of JIS C 2107.

<Film-forming Stability>

The film-forming stability and the resulting condition of the base material were evaluated according to the following procedure.
In the manufacture of the base material, the presence or absence of breakage of the base material was visually confirmed. In addition, the presence or absence of pinholes was visually confirmed over an arbitrary 1 m square area of the base material formed by the calender molding machine. If a pinhole was found, its maximum diameter was measured by microscopic observation. Furthermore, the thickness was measured at 10 arbitrary locations on the formed base material using a thickness gauge (manufactured by Mitutoyo Corporation).
Based on the following judgment criteria, C rating or higher was considered acceptable.

A: No breakage of the base material occurred during film formation by the calender molding machine, no pinholes were confirmed in the formed base material, and the base material thickness was within ± 10% of the specified thickness.
B: Either of the following situations (1) or (2) occurred.

(1) No breakage of the base material occurred during film formation by the calender molding machine, and all measured base material thicknesses were within ±10% of the specified thickness, but minute pinholes with a diameter of less than 1 mm were confirmed in the formed base material.

(2) No breakage of the base material occurred during film formation by the calender molding machine, no pinholes were confirmed in the formed base material, but one or more of the measured base material thicknesses exceeded ±10% but was within ±15% of the specified thickness.

C: No breakage of the base material occurred during film formation by the calender molding machine, but minute pinholes with a diameter of less than 1 mm were confirmed in the formed base material, and one or more of the measured base material thicknesses exceeded ±10% but was within ±15% of the specified thickness.
D: Any of the following situations (1) to (3) occurred.

(1) The base material broke during film formation by the calender molding machine.
(2) Pinholes with a diameter of 1 mm or more were confirmed in the formed base material.
(3) One or more of the measured base material thicknesses exceeded ±15% of the specified thickness.

<Coating Stability>

The coating stability and the resulting condition of the base material were evaluated according to the following procedure.
In the manufacturing of the adhesive tape, the surface of the base material was observed when a predetermined adhesive coating solution was applied on the base material and dried in a drying oven.
Regarding the appearance of the base material surface, B rating or higher was considered acceptable based on the following judgment criteria.

A: No wrinkles due to drying heat occurred on the base material surface.
B: Wrinkles due to drying heat occurred, but they were resolved upon winding onto the paper core.
C: Wrinkles due to drying heat occurred on the base material surface and remained as wrinkles without being resolved upon winding onto the paper core.

<Wire Winding Property>

The wire winding property was evaluated according to the following procedure.
Ten automotive heat-resistant electric wires (manufactured by Sumitomo Electric Industries, Ltd., product name "AVX050", diameter: 50 mm) cut to a length of 800 mm, and four automotive heat-resistant electric wires (manufactured by Sumitomo Electric Industries, Ltd., product name "AVX085", diameter: 85 mm) cut to a length of 800 mm were prepared. These 14 electric wires were bundled, and both ends in the longitudinal direction were fixed together with adhesive tape to facilitate the winding operation. Then, the adhesive tape (width 19 mm) of each example was wound around the outer periphery of the said electric wires with a half-lap to prepare a sample for evaluation. Here, "half-lap winding" means winding the adhesive tape around the electric wires such that half the width of the adhesive tape overlaps with half the width of the previously wound adhesive tape. The prepared samples were evaluated for end peeling of the adhesive tape according to the following evaluation criteria, and B rating or higher was considered acceptable.

A: No end peeling was observed.
B: Slight end peeling (end peeling distance less than 1.0 mm) was observed.
C: End peeling (end peeling distance 1.0 mm or more) was observed.

[Table 1]

| Table 1 | | | | Example | | | | | | | | | |
|---|---|---|---|---|---|---|---|---|---|---|---|---|---|
| Composition | | | Unit | 1 | 2 | 3 | 4 | 5 | 6 | 7 | 8 | 9 | 10 |
| Base Material | Thermoplastic Resin | Polyvinyl Chloride Resin (TH-700) | Parts (phr) | | | | | | | | | | |
| | | Polyvinyl Chloride Resin (TH-1000) | Parts (phr) | 100 | 100 | 100 | 100 | 100 | | 100 | | | 100 |
| | | Polyvinyl Chloride Resin (TH-1300) | Parts (phr) | | | | | | 100 | | | | |
| | | Polyvinyl Chloride Resin (TH-1700) | Parts (phr) | | | | | | | | 100 | 100 | |
| | Plasticizer | Diisononyl Phthalate | Parts (phr) | 45 | 45 | 35 | 35 | 35 | 55 | 35 | 65 | 70 | 25 |
| | | Trioctyl Trimellitate | Parts (phr) | | | | | | | | | | |
| | | Adipic Polyester (W-2050/Mw:2300) | Parts (phr) | | | | | | | | | | |
| | Filler | Calcium Carbonate (Calseeds P) (average particle diameter: 0.18 μm) | Parts (phr) | 6 | | | | | 28 | | | | |
| | Total | | Parts (phr) | 151 | 145 | 135 | 135 | 135 | 183 | 135 | 165 | 170 | 125 |
| Adhesive | Base Polymer | NR (HA-LATEX) | Parts (phr) | | | | | 25 | 25 | 25 | 25 | 25 | 25 |
| | | MMA grafted NR (MG40S) | Parts (phr) | 50 | 50 | 50 | 50 | 35 | 35 | 35 | 35 | 35 | 35 |
| | | SBR (T-093A) | Parts (phr) | 50 | 50 | 50 | 50 | 40 | 40 | 40 | 40 | 40 | 40 |
| | Tackifier | Petroleum Resin (AP-1100) | Parts (phr) | 100 | 100 | 100 | 100 | 85 | 85 | 85 | 85 | 85 | 85 |
| | | Terpene-phenol (E200) | Parts (phr) | | | | | 30 | 30 | 30 | 30 | 30 | 30 |
| | Other Additives | Surfactant (OT-P) | Parts (phr) | 1 | 1 | 1 | 1 | 1 | 1 | 1 | 1 | 1 | 1 |
| | | Antioxidant/Plasticizer (DIEM) | Parts (phr) | | | | | 10 | 10 | 10 | 10 | 10 | 10 |
| | Total | | Parts (phr) | 201 | 201 | 201 | 201 | 226 | 226 | 226 | 226 | 226 | 226 |
| Manufacturing conditions | | Calender Roll Temperature | °C | 165 | 165 | 165 | 170 | 175 | 170 | 175 | 175 | 175 | 175 |
| | | Stretching Ratio (take-off/calender) | − | 2.3 | 1.5 | 1.7 | 2.2 | 1.6 | 1.6 | 2.3 | 1.6 | 1.6 | 1.6 |
| | | Stretching Ratio (winding/take-off) | − | 1.1 | 1.4 | 1.5 | 1.2 | 1.4 | 1.4 | 1.4 | 1.3 | 1.3 | 1.3 |
| | | Overall Stretching Ratio (winding/calender) | − | 2.5 | 2.1 | 2.6 | 2.6 | 2.2 | 2.2 | 3.2 | 2.1 | 2.1 | 2.1 |
| Base Material Thickness | | | μm | 55 | 57 | 60 | 53 | 53 | 53 | 53 | 53 | 53 | 53 |
| Adhesive Thickness | | | μm | 7 | 7 | 7 | 7 | 7 | 7 | 7 | 7 | 7 | 7 |
| Physical Properties | Base Material Properties | Melt Viscosity (175°C, 250sec-1) | Pa·s | 610 | 600 | 760 | 750 | 750 | 610 | 700 | 500 | 430 | 990 |
| | | Melt Tension (175°C, 1m/min) | N | 0.026 | 0.026 | 0.034 | 0.034 | 0.034 | 0.018 | 0.026 | 0.012 | 0.010 | 0.065 |
| | | Heat Shrinkage Rate (MD) | % | 10.0 | 9.7 | 10.3 | 6.2 | 5.1 | 7.0 | 13.0 | 4.0 | 3.3 | 12.5 |
| | | Heat Shrinkage Rate (TD) | % | -2.7 | -3.2 | -1.8 | -2.6 | -2.0 | -1.8 | -3.5 | -2.0 | -1.0 | -3.0 |
| | | Storage Modulus | kPa | 23.0 | 22.8 | 50.4 | 50.1 | 50.3 | 24.2 | 50.4 | 27.9 | 25.0 | 62.5 |
| | | Tensile Modulus | MPa | 90 | 85 | 370 | 360 | 355 | 20 | 365 | 5 | 2.5 | 1500 |
| Evaluation | Viscosity | Adhesive Strength (Normal, To Self-Backing) | N/10mm | 0.9 | 0.9 | 0.9 | 0.7 | 1.1 | 1.3 | 1.3 | 1.2 | 1.1 | 1.1 |
| | Base Material Strength (Tensile) | Breaking Stress | MPa | 24 | 23 | 26 | 25 | 26 | 21 | 26 | 20 | 18 | 31 |
| | | Elongation at Break | % | 240 | 300 | 210 | 230 | 290 | 250 | 200 | 310 | 325 | 260 |
| | Others | Wire Winding Property | Tracking (Wrinkling, Floating) | B | B | A | A | A | B | A | B | B | B |
| | | | Peeling | A | A | A | A | A | B | A | B | B | B |
| | Film-forming Stability | | | B | A | C | A | A | B | B | B | B | B |
| | Coating Stability | | | B | A | B | A | A | A | B | A | A | B |

[Table 2]

| Table 2 | | | | Example | | | | Comparative Example | | | | |
|---|---|---|---|---|---|---|---|---|---|---|---|---|
| Composition | | | Unit | 11 | 12 | 13 | 14 | 1 | 2 | 3 | 4 | 5 |
| Base Material | Thermoplastic Resin | Polyvinyl Chloride Resin (TH-700) | Parts (phr) | 100 | | | | | | | | |
| | | Polyvinyl Chloride Resin (TH-1000) | Parts (phr) | | 100 | 100 | 100 | | | 100 | 100 | 100 |
| | | Polyvinyl Chloride Resin (TH-1300) | Parts (phr) | | | | | | | | | |
| | | Polyvinyl Chloride Resin (TH-1700) | Parts (phr) | | | | | 100 | 100 | | | |
| | Plasticizer | Diisononyl Phthalate | Parts (phr) | 30 | | | 20 | 80 | 100 | 18 | 15 | 35 |
| | | Trioctyl Trimellitate | Parts (phr) | | 30 | | | | | | | |
| | | Adipic Polyester (W-2050/Mw:2300) | Parts (phr) | | | 30 | | | | | | |
| | Filler | Calcium Carbonate (Calseeds P) (average particle diameter: 0.18 μm) | Parts (phr) | | | | | | | | | |
| | Total | | Parts (phr) | 130 | 130 | 130 | 120 | 180 | 200 | 118 | 115 | 135 |
| Adhesive | Base Polymer | NR (HA-LATEX) | Parts (phr) | 25 | 25 | 25 | 25 | 25 | 25 | 25 | 25 | |
| | | MMA grafted NR (MG40S) | Parts (phr) | 35 | 35 | 35 | 35 | 35 | 35 | 35 | 35 | 50 |
| | | SBR (T-093A) | Parts (phr) | 40 | 40 | 40 | 40 | 40 | 40 | 40 | 40 | 50 |
| | Tackifier | Petroleum Resin (AP-1100) | Parts (phr) | 85 | 85 | 85 | 85 | 85 | 85 | 85 | 85 | 100 |
| | | Terpene-phenol (E200) | Parts (phr) | 30 | 30 | 30 | 30 | 30 | 30 | 30 | 30 | |
| | Other Additives | Surfactant (OT-P) | Parts (phr) | 1 | 1 | 1 | 1 | 1 | 1 | 1 | 1 | 1 |
| | | Antioxidant/Plasticizer (DIEM) | Parts (phr) | 10 | 10 | 10 | 10 | 10 | 10 | 10 | 10 | |
| | Total | | Parts (phr) | 226 | 226 | 226 | 226 | 226 | 226 | 226 | 226 | 201 |
| Manufacturing conditions | | Calender Roll Temperature | °C | 175 | 175 | 175 | 175 | 175 | 175 | 175 | 175 | 160 |
| | | Stretching Ratio (take-off/calender) | – | 1.6 | 1.6 | 1.6 | 1.6 | 1.6 | 1.6 | 1.6 | 1.6 | 2.3 |
| | | Stretching Ratio (winding/take-off) | – | 1.3 | 1.3 | 1.3 | 1.4 | 1.4 | 1.4 | 1.4 | 1.4 | 1.6 |
| | | Overall Stretching Ratio (winding/calender) | – | 2.1 | 2.1 | 2.1 | 2.2 | 2.2 | 2.2 | 2.2 | 2.2 | 3.7 |
| Base Material Thickness | | | μm | 53 | 53 | 53 | 60 | 52 | 54 | 55 | 57 | 55 |
| Adhesive Thickness | | | μm | 7 | 7 | 7 | 7 | 7 | 7 | 7 | 7 | 7 |
| Physical Properties | Base Material Properties | Melt Viscosity (175°C, 250sec-1) | Pa·s | 810 | 850 | 890 | 1230 | 390 | 270 | 1350 | 1560 | 750 |
| | | Melt Tension (175°C, 1m/min) | N | 0.053 | 0.051 | 0.055 | 0.089 | 0.008 | 0.007 | 0.110 | 0.130 | 0.034 |
| | | Heat Shrinkage Rate (MD) | % | 6.9 | 7.1 | 7.2 | 13.2 | 4.0 | 4.3 | 16.0 | 15.5 | 16.0 |
| | | Heat Shrinkage Rate (TD) | % | -1.7 | -1.8 | -1.6 | -2.0 | -0.5 | -0.4 | -6.0 | -6.0 | -1.2 |
| | | Storage Modulus | kPa | 53.0 | 57.5 | 57.8 | 68.0 | 18.6 | 6.4 | 69.3 | 70.1 | 50.3 |
| | | Tensile Modulus | MPa | 365 | 370 | 375 | 3400 | 1 | 0.1 | 3747 | 4740 | 375 |
| Evaluation | Viscosity | Adhesive Strength (Normal, To Self-Backing) | N/10mm | 1.3 | 1 | 1 | 0.9 | 0.9 | 0.6 | 1 | 1 | 1.1 |
| | Base Material Strength (Tensile) | Breaking Stress | MPa | 28 | 27 | 27 | 33 | 15 | 11 | 38 | 38 | 29 |
| | | Elongation at Break | % | 310 | 320 | 330 | 240 | 150 | 120 | 20 | 20 | 100 |
| | Others | Wire Winding Property | Tracking (Wrinkling, Floating) | A | A | A | A | C | C | C | C | C |
| | | | Peeling | A | A | A | A | C | C | C | C | B |
| | Film-forming Stability | | | B | B | B | C | D | D | D | D | D |
| | Coating Stability | | | A | A | A | B | B | B | C | C | C |

Based on the results in Tables 1 and 2, it is understood that the adhesive tapes of the Examples achieve excellent lightweight properties through thinning, have the base material strength and adhesive strength for bundling electric wires such as cables, and are also excellent in film-forming stability and coating stability during manufacturing, and have an excellent base material condition. On the other hand, the adhesive tapes of the Comparative Examples, although achieving lightweight properties through thinning, were inferior in one or more aspects of base material strength for bundling electric wires, film-forming stability, and coating stability related to the base material condition.

## Industrial Applicability

The adhesive tape of the present invention is excellent in lightweight properties, has good base material strength and adhesive strength, and is also excellent in the condition of the base material. The adhesive tape of the present invention can be suitable for applications such as bundling and protection of electric wires such as high-voltage cables and wire harnesses of electric vehicles, hybrid vehicles, and automobiles, and has industrial applicability.

## Claims

1. An adhesive tape comprising:

   a base material consisting of a resin composition containing a thermoplastic resin; and
   an adhesive layer provided on at least one surface of the base material, wherein:

      a shrinkage rate of the base material in a transverse direction under heating conditions of 110°C for 5 minutes is -5.0 to 0%;
      a shrinkage rate of the base material in a machine direction under heating conditions of 110°C for 5 minutes is 0 to 15%;
      a thickness of the base material is 25 to 65 μm;
      a thickness of the adhesive layer is 0.5 to 12.0 μm;
      a melt viscosity of the base material at 175°C and at a shear rate of 250 $sec^{-1}$ is 300 to 1,300 Pa·s; and
      a melt tension of the base material at 175°C and at a take-off speed of 1.0 m/min is 0.01 to 0.10 N.

2. The adhesive tape of Claim 1, wherein a storage modulus of the base material, as measured by a dynamic viscoelasticity measurement performed in a shear mode at a temperature of 175°C and at an angular frequency of 0.1 rad/s, is 20.0 to 70.0 kPa.

3. The adhesive tape of Claim 1 or Claim 2, wherein a tensile modulus of the base material is 2 to 3500 MPa, wherein the tensile strength of the base material is measured according to the conditions of "Section 8 'Tensile strength and elongation at break'" of JIS C 2107, and the tensile modulus is calculated from a obtained result by following formula:

   Tensile modulus (MPa) = [Tensile stress (MPa) measured at a strain of 0.02 - Tensile stress (MPa) measured at a strain of 0.015]/0.005.

4. The adhesive tape of Claim 1 or Claim 2, wherein the thermoplastic resin is a polyvinyl chloride resin, and the polyvinyl chloride resin has an average degree of polymerization of 500 to 2,000.

5. The adhesive tape of Claim 1 or Claim 2, wherein the resin composition comprises 20 to 75 parts by mass of a plasticizer, and 30 parts by mass or less of a filler with respect to 100 parts by mass of the thermoplastic resin.

6. The adhesive tape of Claim 5, wherein the filler has an average particle diameter of 0.3 μm or less.

7. The adhesive tape of Claim 5, wherein the plasticizer comprises at least one selected from a group consisting of a trimellitate ester plasticizer, a phthalate ester plasticizer, and an adipate ester plasticizer.

8. The adhesive tape of Claim 1 or Claim 2, wherein the adhesive layer comprises a tackifier.

9. The adhesive tape of Claim 8, wherein the tackifier comprises a petroleum resin.

10. The adhesive tape of Claim 1 or Claim 2, wherein the adhesive layer comprises a graft copolymer of an alkyl (meth) acrylate and at least one rubber component selected from a group consisting of natural rubber and synthetic rubber.

11. The adhesive tape of Claim 1 or Claim 2, wherein the thickness of the base material is 40 to 60 μm.

12. The adhesive tape of Claim 1 or Claim 2, wherein the thickness of the adhesive layer is 2.0 to 10.0 μm.

13. The adhesive tape of Claim 1 or Claim 2, wherein the adhesive tape is for bundling electric wires.

14. A bundle of electric wires bundled with the adhesive tape of Claim 13.

15. A method for manufacturing the adhesive tape of Claim 1 or Claim 2, the method comprising:

a step of obtaining the base material by stretching the resin composition containing the thermoplastic resin in the machine direction at a stretching ratio of 3.5 times or less; and
a step of providing the adhesive layer on at least one surface of the base material,
wherein a temperature of the resin composition immediately before stretching is 165°C or higher in the step of obtaining the base material.

## INTERNATIONAL SEARCH REPORT

International application No.
**PCT/JP2024/004976**

**A. CLASSIFICATION OF SUBJECT MATTER**

***C09J 7/24***(2018.01)i; ***C09J 7/38***(2018.01)i; ***C09J 107/00***(2006.01)i; ***C09J 109/00***(2006.01)i; ***C09J 133/08***(2006.01)i; ***C09J 133/10***(2006.01)i
FI: C09J7/24; C09J107/00; C09J133/08; C09J133/10; C09J109/00; C09J7/38

According to International Patent Classification (IPC) or to both national classification and IPC

**B. FIELDS SEARCHED**

Minimum documentation searched (classification system followed by classification symbols)

C09J7/24; C09J7/38; C09J107/00; C09J109/00; C09J133/08; C09J133/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/191154 A1 (DENKA CO., LTD.) 15 September 2022 (2022-09-15) claims 1-7, paragraphs [0001]-[0005], [0008]-[0015], [0026]-[0037], [0045]-[0058] | 1-15 |
| A | WO 2018/168990 A1 (DENKA CO., LTD.) 20 September 2018 (2018-09-20) claims 1-14, paragraphs [0046]-[0081] | 1-15 |
| A | JP 2017-193620 A (YAZAKI CORPORATION) 26 October 2017 (2017-10-26) claims 1-4, paragraphs [0015]-[0028], [0052]-[0075] | 1-15 |
| A | JP 2017-119806 A (NITTO DENKO CORPORATION) 06 July 2017 (2017-07-06) claims 1-9, paragraphs [0002]-[0014], [0018]-[0030], [0086]-[0097] | 1-15 |
| A | JP 2000-204213 A (TOYO CHEMICALS CO., LTD.) 25 July 2000 (2000-07-25) claim 1, paragraphs [0021]-[0035] | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2024** | **02 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/004976**

**C. DOCUMENTS CONSIDERED TO BE RELEVANT**

| Category* | Citation of document, with indication, where appropriate, of the relevant passages | Relevant to claim No. |
|---|---|---|
| A | JP 2021-46532 A (NIPPON CARBIDE KOGYO KABUSHIKI KAISHA) 25 March 2021 (2021-03-25)<br>claims 1-8, paragraphs [0122]-[0168] | 1-15 |

Form PCT/ISA/210 (second sheet) (July 2022)

**INTERNATIONAL SEARCH REPORT**
**Information on patent family members**

International application No.
**PCT/JP2024/004976**

| Patent document cited in search report | Publication date (day/month/year) | Patent family member(s) | Publication date (day/month/year) |
|---|---|---|---|
| WO 2022/191154 A1 | 15 September 2022 | (Family: none) | |
| WO 2018/168990 A1 | 20 September 2018 | US 2020/0071573 A1<br>claims<br>EP 3597715 A1<br>CN 110418826 A | |
| JP 2017-193620 A | 26 October 2017 | US 2017/0306186 A1<br>CN 107304336 A | |
| JP 2017-119806 A | 06 July 2017 | US 2016/0289505 A1<br>claims<br>JP 2016-194033 A<br>JP 2016-194042 A<br>JP 2016-194043 A<br>US 2016/0289506 A1<br>US 2018/0086945 A1<br>WO 2016/158411 A1<br>WO 2016/158412 A1<br>EP 3075806 A1<br>EP 3279283 A1<br>EP 3075805 A1<br>CN 106047195 A<br>CN 106047196 A<br>CN 108307637 A<br>CN 108307638 A | |
| JP 2000-204213 A | 25 July 2000 | (Family: none) | |
| JP 2021-46532 A | 25 March 2021 | CN 112480835 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11209718 A
- WO 2019049565 A